# EUROPÄISCHE PATENTSCHRIFT

(11) **EP 2 433 092 B1**
(45) Veröffentlichungstag und Bekanntmachung des Hinweises auf die Patenterteilung: **05.07.2017**
(21) Anmeldenummer: 10715882.6
(22) Anmeldetag: 03.05.2010
(51) Int. Cl.: G01C 11/00, G02B 27/00, G03B 9/00, H04N 7/18

(54) **LUFTBILDKAMERA-SYSTEM UND VERFAHREN ZUM KORRIGIEREN VON VERZERRUNGEN IN EINER LUFTBILDAUFNAHME**
AERIAL PICTURE CAMERA SYSTEM AND METHOD FOR CORRECTING DISTORTION IN AN AERIAL PICTURE
SYSTÈME DE CAMÉRA AÉRIENNE ET PROCÉDÉ DE CORRECTION DE DISTORSIONS DANS UNE IMAGE AÉRIENNE

(30) Priorität: 19.05.2009 EP 09160615
(43) Veröffentlichungstag der Anmeldung: 28.03.2012
(73) Patentinhaber: Leica Geosystems AG, 9435 Heerbrugg (CH); NovAtel Inc., Calgary, Alberta T2E 8S5 (CA)
(72) Erfinder: FERRANO, Gert, 73434 Aalen - Unterrombach (DE); WALSER, Bernd, CH-9435 Heerbrugg (CH); MORIN, Kristian, Calgary, Alberta T2E 8S5 (CA)
(74) Vertreter: Kaminski Harmann
(86) Internationale Anmeldenummer: PCT/EP2010/055987
(87) Internationale Veröffentlichungsnummer: WO 2010/133445

(56) Entgegenhaltungen:
- DE-A1- 2 940 871
- DE-A1- 4 210 245
- US-A- 5 668 593
- US-A1- 2002 149 674
- US-A1- 2008 138 059
- John C. Craig: "Comparison of Leica ADS40 and Z/I imaging DMC high-resolution airborne sensors" 28. Februar 2005 (2005-02-28), Seiten 271-281, XP002550602 DOI: 10.1117/12.579731 Gefunden im Internet: URL:http://spiedl.aip.org/getpdf/servlet/G etPDFServlet?filetype=pdf&id=PSISDG0056550 00001000271000001&idtype=cvips&prog=normal > [gefunden am 2009-10-14]
- RALF REULKE ET AL: "Iterative Stereo Reconstruction from CCD-Line Scanner Images" 1. Januar 2005 (2005-01-01), COMPUTER ANALYSIS OF IMAGES AND PATTERNS LECTURE NOTES IN COMPUTER SCIENCE;;LNCS, SPRINGER, BERLIN, DE, PAGE(S) 112 - 119 , XP019019181 ISBN: 9783540289692 Zusammenfassung Seite 112, Zeile 1 - Seite 113, Zeile 8 Seite 114, Zeilen 1-5 Abbildung 2
- Tohru Yotsumata et al.: "Investigation for mapping accuracy of the airborne digital sensor ADS40" Integrated Remote Sensing at the Global, Regional and Local Scale 15. November 2002 (2002-11-15), XP002550603 Gefunden im Internet: URL:http://www.isprs.org/commission1/proce edings02/paper/00055.pdf> [gefunden am 2009-10-14]
- Udo Tempelmann et al.: "Photogrammetric software for the LH Systems ADS40 airborne digital sensor" 4. März 2002 (2002-03-04), XP002550604 Gefunden im Internet: URL:ftp://ftp.gis.leica-geosystems.com/out going/docs/ada/ADS40_Software_Brochure.pdf > [gefunden am 2009-10-14]

## Beschreibung

Die Erfindung betrifft ein Verfahren zum Korrigieren einer durch eine Flugvorwärtsbewegung verursachten Verzerrung in einer Luftbildaufnahme, die mit einer Luftbildkamera von einem Flugobjekt aus aufgenommen wird, nach dem Oberbegriff des Anspruchs 1, ein Verfahren Aufnehmen von Luftbildern nach dem Oberbegriff des Anspruchs 8, ein Luftbildkamera-System nach dem Oberbegriff des Anspruchs 9 und ein Computerprogrammprodukt nach Anspruch 12.

Luftbildkameras mit photosensitiven elektronischen, meist hochauflösenden Flächensensoren sind seit Längerem bekannt und werden zur Aufnahme von Luftbildern eingesetzt, die z.B. von einem sich in bestimmter Flughöhe mit bestimmter Fluggeschwindigkeit bewegenden Flugobjekt aus erfasst werden. Typischerweise weisen bekannte Luftbildkameras dabei einen zentralen, globalen Blendenverschluss auf.

Eine solche Luftbildkamera ist beispielsweise in der Veröffentlichungsschrift DE 199 32 065 A1 beschrieben.

Um eine scharfe Abbildung zu erreichen, werden die lichtempfindlichen Pixel (5) des Flächensensors, der insbesondere aus einer Vielzahl an CCD- oder CMOS-Zeilen besteht, mit der Bildebene des Objektivs in Übereinstimmung gebracht. In Abhängigkeit von Brennweite und Öffnungsverhältnis des verwendeten Objektivs sind nur kleine Lageabweichungen zwischen der Bildebene und der Fokalebene - d.h. der Oberfläche des Flächensensors - zugelassen.

Aus der Sportphotographie ist bekannt, dass - um beispielsweise einen Läufer scharf abzubilden - die Kamera während der Belichtungszeit entsprechend der Bewegung des Läufers mitzuschwenken ist. Ansonsten erhält man ein verschmiertes Bild des Läufers, das eine so genannte Bewegungsunschärfe aufweist.

Das gleiche Problem tritt auch bei optoelektronischen Erkundungssystemen auf, die von Flugzeugen aus eingesetzt werden. Während der Belichtungszeit bzw. Integrationszeit für z.B. ein bestimmtes, im Erfassungsbereich der Luftbildkamera liegendes Planquadrat auf der Erdoberfläche ergibt sich eine Verschiebung des aufzunehmenden Planquadrates bezüglich der im fliegenden Objekt angeordneten Luftbildkamera. Dieser Effekt führt dann bei derartigen Aufnahmen ebenfalls zu einer Verwaschung bzw. Bewegungsunschärfe der aufgenommenen Luftbilder.

Aus der US 5,460,341 ist eine Luftbildkamera bekannt, wobei mittels linearer Stelleinrichtungen die Fokalebene zur Kompensation der Fokusdrift in verschiedenen Richtungen verstellbar ist. Die Luftbildkamera umfasst einen Fokusdrift-Sensor, der die Position der die Abbildungsoptik bildenden Teile erfasst, und einen Temperatursensor, der die Temperatur verschiedener Bereiche der Abbildungsoptik erfasst. Mittels anhand Computersimulation bestimmter Werte für die Fokusdrift wird dann die Fokalebene in Abhängigkeit der Werte des Fokusdrift-Sensors und des Temperatursensors nachgeführt.

Aus der DE 195 02 045 ist eine Fokalebene mit CCD-Zeilen einer Luftbildkamera bekannt, die mittels eines piezoelektrischen Stellelementes senkrecht zur optischen Achse bewegbar ist. Dadurch sollen Bildverwaschungen bzw. Bewegungsunschärfen kompensiert werden, die durch die Flugvorwärtsbewegung und somit der relativen Bewegung der Kamera zum erfassten Gelände während der Belichtung hervorgerufen werden.
Auch die EP 1 570 314 B1 und die US 3,744,387 beschreiben Luftbildkameras mit einer Kompensation der Flugvorwärtsbewegung durch Stellelemente, die eine entsprechende Nachführung des Sensors bzw. des Films bewirken.
Andere bekannte Ansätze um eine Bildverwaschung in Aufnahme von relativ zur Kamera bewegten Objekten zu reduzieren, zielen auf das Verkürzen der Belichtungszeiten ab.

Die Patentschrift US 2002/0149674 beschreibt eine Vorrichtung und ein Verfahren zur Vermeidung von Bildverwaschung oder Bildverschmierung in einer Fernerkundungskamera, die in einem Flugzeug eingesetzt wird. Das System umfasst einen CCD-Bildsensor und einen Schlitzblendenverschluss, der sich über die Fokalebene verschiebt. Das System sieht vor, dass die passenden Belichtungsdauer, Schlitzbreite und Geschwindigkeit des Schlitzblendenverschlusses in Abhängigkeit von Fluggeschwindigkeit, Flughöhe und Kameraausrichtung bestimmt werden.

So ist bekannt, dass z.B. bei Verwendung eines Schlitzblendenverschlusses geringere Belichtungszeiten - verglichen mit erforderlichen Belichtungszeiten bei einem zentralen, globalen Blendenverschluss - erreichbar sind. Bei einem Schlitzblendenverschluss werden zwei Blendenelemente eingesetzt, die auch als Vorhänge bezeichnet werden. In Grundstellung, in der keine Belichtung erfolgt, ist ein erster der beiden Vorhänge geschlossen, sodass dieser den Sensor komplett verdeckt, wohingegen der zweite Vorhang offen ist und den Sensor nicht verdeckt. Zur Bildaufnahme öffnet sich der erste Vorhang und bewegt sich üblicher Weise mit konstanter Geschwindigkeit über das Bild. Sobald für die durch das Öffnen des ersten Vorhangs zuerst freigegebene Sensor-Linie die gewünschte Belichtungszeit erreicht ist, beginnt der zweite Vorhang sich zu schliessen und sich mit z.B. konstanter Geschwindigkeit - und in derselben Richtung wie der erste Vorhang - über das Bild zu bewegen. Dadurch rollt oder läuft eine Schlitzblende quasi über das Bild.
Die Folge dieser Blendenverschlussart ist, dass einzelne Stellen des Flächensensors (d.h. die jeweils zeitlich nacheinander zur Belichtung freigegebenen und wieder verdeckten Sensor-Linien) zu unterschiedlichen Zeitpunkten belichtet werden. Dadurch weisen die jeweiligen Sensor-Linien unterschiedliche mittlere Belichtungszeitpunkte auf. Die Belichtungsdauer der einzelnen Sensor-Linien kann dadurch - verglichen mit der Belichtungsdauer bei zentralen Blenden - merklich verkürzt werden. Zwar kann somit eine Bildverwaschung bzw. Bewegungsunschärfe in Aufnahmen von relativ zur Kamera bewegten Objekten verringert werden. Da sich jedoch das projizierte Bild bei Luftbildaufnahmen durch die Flugvorwärtsbewegung relativ zum Sensor und relativ, insbesondere parallel, zum Vorhang der Schlitzblende bewegt, ist - bedingt durch die unterschiedlichen Belichtungszeitpunkte der einzelnen Sensor-Linien - das durch den Sensor erfasste Luftbild des Geländes entweder gestaucht, d.h. zusammen gequetscht, oder gestreckt, d.h. in die Länge gezogen; je nach dem, ob sich die Schlitzblende in Gleich- oder in Gegenrichtung des projizierten Bildes über den Flächensensor verschiebt.

Allerdings kommt es bei Luftbildaufnahmen vor, dass die Driftgeschwindigkeit des projizierten Bilds relativ zum Sensor während einer Aufnahme nicht konstant bleibt, da die Driftgeschwindigkeit u.a. von der Fluggeschwindigkeit und der Flughöhe über dem zu erfassenden Gelände abhängt. Dies kann zu unerwünschten Verzerrungen in der Luftbildaufnahme führen.

Eine Aufgabe der Erfindung ist daher das Bereitstellen eines verbesserten Verfahrens zum Korrigieren einer durch eine Flugvorwärtsbewegung verursachten Verzerrung in einer Luftbildaufnahme, die mit einer Schlitzblendenverschluss-Luftbildkamera von einem Flugobjekt aus aufgenommen wird, sowie eines verbesserten Luftbildkamera-Systems dafür.

Insbesondere soll dabei eine verbesserte Kompensation jener Verzerrungen ermöglicht werden, die bedingt sind durch die - aufgrund des Schlitzblendenverschluss gegebenen - unterschiedlichen Belichtungszeitpunkte der jeweiligen Sensor-Linien.

Diese Aufgabe wird durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Die Erfindung betrifft ein Verfahren zum Korrigieren einer durch eine Flugvorwärtsbewegung verursachten Verzerrung in einer Luftbildaufnahme, die mit einer Luftbildkamera von einem Flugobjekt aus aufgenommen wird.

Die Luftbildaufnahme wird durch einen eine Vielzahl von photosensitiven Pixeln aufweisenden Flächensensor der Luftbildkamera erfasst. Erfindungsgemäss kommt dabei ein Schlitzblendenverschluss zum Einsatz, wobei sich die Schlitzblende mit bekannter, insbesondere konstanter, Geschwindigkeit über den Flächensensor und über ein projiziertes Bild verschiebt. Dadurch werden die einzelnen - sich entlang der Schlitzblendenöffnung erstreckenden - Sensor-Linien des Flächensensors jeweils zu unterschiedlichen, aufeinander folgenden Belichtungszeitpunkten belichtet, sodass durch die Sensor-Linien jeweils ein Bild eines Geländestreifens zu den unterschiedlichen Belichtungszeitpunkten erfasst wird.

Wie eingangs bereits erwähnt, driftet bei Luftbildaufnahmen das projizierte Bild eines Geländeabschnitts relativ zum Flächensensor durch die Flugvorwärtsbewegung des Flugobjekts.

Die entsprechende Driftgeschwindigkeit des Bildes gegenüber dem Flächensensor hängt dabei u.a. von der Fluggeschwindigkeit und dem Abbildungsmassstab ab, wobei sich der Abbildungsmassstab aus der Brennweite und der relativen Flughöhe über dem erfassten Gelände bestimmt. Weist beispielsweise das im Rahmen einer Luftbildaufnahme erfasste Gelände ein variierendes Höhenprofil auf, so ist auch die Driftgeschwindigkeit verschiedener Bereiche des projizierten Bilds relativ zum Flächensensor unterschiedlich hoch.

Erfindungsgemäss wird daher den einzelnen Sensor-Linien jeweils eine, insbesondere zum Belichtungszeitpunkt aktuelle, relative Flughöhe über dem durch die jeweilige Sensor-Linie erfassten Geländestreifen zugeordnet.

Abhängig von der jeweils zugeordneten relativen Flughöhe wird nun für die einzelnen Sensor-Linien separat jeweils ein Vorwärtsbewegungs-Kompensationsfaktor bestimmt und die Verzerrung in der Luftbildaufnahme linienweise anhand des jeweiligen Kompensationsfaktors korrigiert.

Als der Belichtungszeitpunkt der einzelnen Sensor-Linien kann dabei jeweils beispielsweise ein mittlerer Zeitpunkt während der jeweiligen Belichtungszeit der einzelnen Sensor-Linien angenommen werden, sodass ein konkreter Belichtungszeitpunkt der jeweiligen Sensor-Linien abhängig vom Belichtungsbeginn und/oder vom Belichtungs-Endzeitpunkt fiktiv definiert werden kann.
In einem Beispiel können die Sensor-Linien mit den Zeilen des Flächensensors übereinstimmen, nämlich im Fall, dass die Vorhänge der Schlitzblende - und somit auch der Schlitz - parallel zu den Sensor-Zeilen ausgerichtet sind. Alternativ können jedoch die Vorhänge auch schräg bzw. verdreht zu den Sensor-Zeilen angeordnet sein. In diesen Fällen werden als die Sensor-Linien jeweils jene Pixel des Flächensensors zusammengefasst, die entlang des Schlitzes verlaufender, fiktiver Linien ausgerichtet sind. Die Pixel, die in einem solchen Fall jeweils zu einer Sensor-Linie zusammengefasst werden, können beispielsweise anhand Interpolation bestimmt werden.
Gemäss einer Ausführungsform der Erfindung können die den Sensor-Linien jeweils zugeordneten relativen Flughöhen über den erfassten Geländestreifen unter Berücksichtigung eines bekannten digitalen 3D-Modells des überflogenen Geländes bestimmt werden.
Ein solches 3D-Geländemodell kann dabei entweder bereits bekannt und abrufbereit in einem Speicher abgelegt sein, und/oder erst während des Fluges erfasst und erstellt werden. Beispielsweise kann dafür das Gelände anhand eines Laserscanners - insbesondere zeitlich parallel zum Erfassen der Luftbildaufnahmen - vermessen und daraus das digitale 3D-Modell erstellt werden, wobei z.B. der Erfassungsbereich des Laserscanners dem Erfassungsbereich der Luftbildkamera in Flugrichtung vorgeordnet ist.

Wie bereits bekannt, wird der jeweilige Kompensationsfaktor insbesondere abhängig von Messdaten eines im Flugobjekt mitgeführten Satellitennavigationssystems (wie Fluggeschwindigkeit, Position, absolute Flughöhe des Flugobjekts, etc.) und abhängig von Messdaten einer Inertialsensoreneinheit "IMU" (wie Gier-, Längsneigungs- und Querneigungswinkel des Flugobjekts) bestimmt.

Zudem wird vorzugsweise zur Ableitung des Kompensationsfaktors auch die Brennweite der Luftbildkamera miteinbezogen, da die Driftgeschwindigkeit des Bildes relativ zum Flächensensor sowohl von der relativen Flughöhe - die erfindungsgemäss linienweise zur Verzerrungskompensation berücksichtigt wird - als auch von der Brennweite abhängt.

Diese weiteren Eingangsdaten (GPS, IMU, Brennweite), von welchen die jeweiligen Kompensationsfaktoren ebenso abhängen, können beispielsweise jeweils für alle oder einige Sensor-Linien gemeinsam berüchsichtigt werden (insbesondere im Fall, dass sich das Flugobjekt über die Gesamtbelichtungszeit des Flächensensors hinweg verhältnismässig konstant fortbewegt und sich die Brennweite nicht ändert, sodass sich diese Eingangsdaten nicht wesentlich ändern). Alternativ können diese Eingangsdaten jedoch auch - wie erfindungsgemäss die relative Flughöhe - für die einzelnen Linien-Sensoren zu den jeweiligen Belichtungszeitpunkten aktuell erfasst und beim Bestimmen des jeweiligen Kompensationsfaktors berücksichtigt werden.

D.h., dass entweder z.B. für alle Kompensationsfaktoren der einzelnen Sensor-Linien eine gemeinsame Fluggeschwindigkeit, eine gemeinsame Brennweite der Kamera, etc. angenommen werden kann, oder aber diese jeweils für die Sensor-Linien einzeln zu den jeweiligen Belichtungszeitpunkten erfasst und - zur Ableitung der Kompensationsfaktoren - den Sensor-Linien zugeordnet werden.

Des Weiteren betrifft die Erfindung ein Verfahren zum mit einer Luftbildkamera von einem Flugobjekt aus erfolgenden Aufnehmen eines Luftbilds von einem überflogenen Gelände unter Verwendung eines Schlitzblendenverschlusses, wobei eine durch eine Flugvorwärtsbewegung des Flugobjekts verursachte Verzerrung im aufgenommenen Luftbild anhand des oben beschriebenen erfindungsgemässen Kompensations-Verfahrens korrigiert wird.

Das erfindungsgemässe Luftbildkamera-System zur von einem Flugobjekt aus erfolgenden Aufnahme von Luftbildern eines überflogenen Geländes weist ein Objektiv, einen - eine Vielzahl von photosensitiven Pixel aufweisenden - Flächensensor, einen sich über ein projiziertes Bild verschiebbaren Schlitzblendenverschluss zur Belichtung von einzelnen Sensor-Linien, insbesondere Zeilen, des Flächensensors zu jeweils unterschiedlichen, aufeinander folgenden Belichtungszeitpunkten, sodass die Sensor-Linien jeweils einen Geländestreifen des überflogenen Geländes zu den unterschiedlichen Belichtungszeitpunkten erfassen, und eine elektronischen Datenverarbeitungseinheit auf. Die Datenverarbeitungseinheit ist dabei zur Durchführung zumindest folgender Schritte des oben beschriebenen erfindungsgemässen Kompensations-Verfahrens ausgebildet:
- Zuordnen von jeweils einer, insbesondere zum Belichtungszeitpunkt aktuellen, relativen Flughöhe über dem durch die jeweilige Sensor-Linie erfassten Geländestreifen zu den einzelnen Sensor-Linien, und
- Bestimmen jeweils eines Kompensationsfaktors separat für jede Sensor-Linie, der von einer Fluggeschwindigkeit des Flugobjekts, einer Brennweite der Luftbildkamera sowie der der jeweiligen Sensor-Linie zugeordneten relativen Flughöhe abhängt, und
- linienweises Korrigieren einer durch eine Flugvorwärtsbewegung verursachten Verzerrung in der Luftbildaufnahme anhand des jeweiligen Kompensationsfaktors.

Insbesondere kann dabei ein Speicher für ein digitales 3D-Modell des überflogenen Geländes vorgesehen sein, sodass die Datenverarbeitungseinheit aus der Kenntnis des gespeicherten digitalen 3D-Modells jeweils linienweise die relativen Flughöhen über den anhand der Sensor-Linien erfassten Geländestreifen ableiten kann.

Gemäss einer Ausführungsform kann zusätzlich ein Laserscanner zur Vermessung des Geländes vorhanden sein, wobei der Erfassungsbereich des Laserscanners derart ausgerichtet sein kann, dass dieser dem Erfassungsbereich der Luftbildkamera in Flugrichtung vorgeordnet ist. Dadurch wird ermöglicht, dass während eines Fluges sowohl das digitale 3D-Modell abgeleitet als auch die Luftbilder aufgenommen und linienweise - abhängig von der jeweiligen relativen Flughöhe - kompensiert werden können.

Des Weiteren bezieht sich die Erfindung auf ein Computerprogrammprodukt, das auf einem maschinenlesbaren Träger gespeichert ist, oder ein Computer-Daten-Signal, verkörpert durch eine elektromagnetische Welle, mit Programmcode zur Durchführung zumindest folgender Schritte des oben beschriebenen erfindungsgemässen Kompensations-Verfahrens:
- Zuordnen von jeweils einer, insbesondere zum Belichtungszeitpunkt aktuellen, relativen Flughöhe über dem durch die jeweilige Sensor-Linie erfassten Geländestreifen zu den einzelnen Sensor-Linien, und
- Bestimmen jeweils eines Kompensationsfaktors separat für jede Sensor-Linie, der von einer Fluggeschwindigkeit des Flugobjekts, einer Brennweite der Luftbildkamera sowie der der jeweiligen Sensor-Linie zugeordneten relativen Flughöhe abhängt, und
- linienweises Korrigieren einer durch eine Flugvorwärtsbewegung verursachten Verzerrung in der Luftbildaufnahme anhand des jeweiligen Kompensationsfaktors.

Das erfindungsgemässe Verfahren und die erfindungsgemässe Vorrichtung werden nachfolgend anhand von in den Zeichnungen schematisch dargestellten Figuren und konkreten Ausführungsbeispielen rein beispielhaft näher beschrieben, wobei auch auf weitere Vorteile der Erfindung eingegangen wird. Im Einzelnen zeigen:
- Fig.1: einen Flächensensor 4, dessen Sensor-Linien 6 anhand eines Schlitzblendenverschlusses 7 jeweils zu unterschiedlichen Zeitpunkten belichtet werden;
- Fig.2: einen Gesamterfassungsbereich 12 einer von einem Flugzeug getragenen Luftbildkamera 2 sowie einen zu einem konkreten Belichtungszeitpunkt-aufgrund der Stellung des Schlitzverschlusses-erfassten Geländestreifen 9;
- Fig.3: eine Luftbildkamera 2 - die sich relativ zum überflogenen Gelände 8 vorwärts bewegt - während einer Luftbildaufnahme 1;
- Fig.4: ein Flugzeug mit einer Luftbildkamera 2, wobei eine Luftbildaufnahme 1 von einem verschiedene Profilhöhen aufweisenden Gelände erfasst wird;
- Fig.5: die aus Figur 4 erfasste Luftbildaufnahme 1, einmal korrigiert mittels eines konstanten Kompensationsfaktors und einmal korrigiert anhand des erfindungsgemässen Verfahrens mit für jede Sensor-Linie jeweils separat ermitteltem Kompensationsfaktor;
- Fig.6: ein Flächensensor 4, wobei anhand eines schräg ausgerichteten Schlitzblendenverschlusses 7 jeweils schräg verlaufende Sensor-Linien 6 zu unterschiedlichen Zeitpunkten belichtet werden;
- Fig.7: ein erfindungsgemässes Luftbildkamera-System; und
- Fig.8: ein erfindungsgemässes Vermessungsgerät mit weiter Pupillenöffnung des Okulars im Vergleich zu einem Vermessungsgerät des Standes der Technik mit Direktsichtkanal und geringer Pupillenöffnung des Okulars.

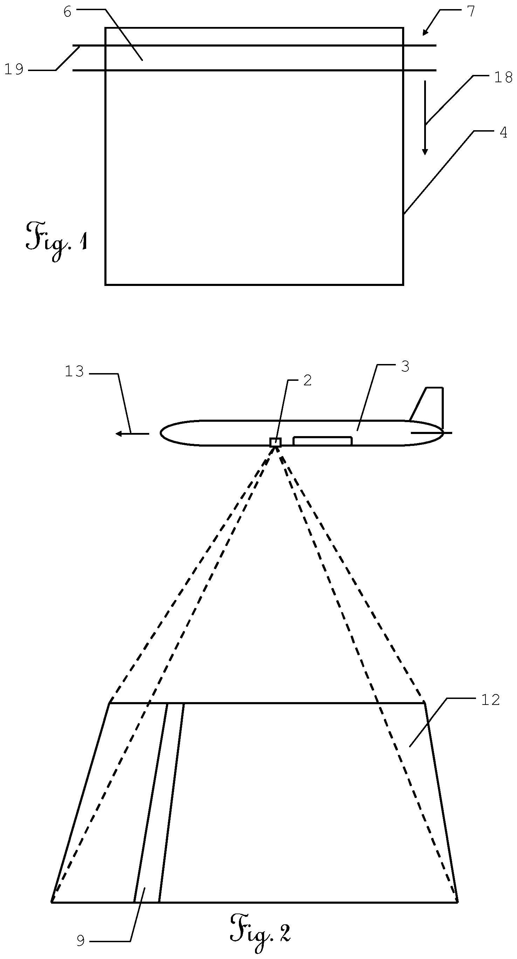

Figur 1 zeigt einen Flächensensor 4, dessen Sensor-Linien 6 anhand eines Schlitzblendenverschlusses 7 jeweils zu unterschiedlichen Zeitpunkten belichtet werden.

Bei dem - im Rahmen des erfindungsgemässen Verfahrens und Systems zur Anwendung kommenden - Schlitzblendenverschluss 7 werden zwei Blendenelemente eingesetzt, die auch als Vorhänge bezeichnet werden. In Grundstellung, in der keine Belichtung erfolgt, ist ein erster der beiden Vorhänge geschlossen, sodass dieser den Sensor komplett verdeckt, wohingegen der zweite Vorhang 23 offen ist und den Sensor nicht verdeckt. Zur Bildaufnahme öffnet sich der erste Vorhang 22 und bewegt sich mit bekannter Geschwindigkeit über das Bild. Sobald für die durch das Öffnen des ersten Vorhangs 22 zuerst freigegebene Sensor-Linie die gewünschte Belichtungszeit erreicht ist, beginnt der zweite Vorhang 23 sich zu schliessen und sich mit z.B. konstanter Geschwindigkeit - und in derselben Richtung wie der erste Vorhang 22 - über das Bild zu bewegen. Dadurch rollt oder läuft eine Schlitzblende quasi über das Bild.

Die Folge dieser Blendenverschlussart ist, dass einzelne Stellen des Flächensensors 4 (d.h. die jeweils zeitlich nacheinander zur Belichtung freigegebenen und wieder verdeckten Sensor-Linien 6) zu unterschiedlichen Zeitpunkten belichtet werden. Dadurch weisen die jeweiligen Sensor-Linien 6 unterschiedliche mittlere Belichtungszeitpunkte auf.

Die Belichtungsdauer der einzelnen Sensor-Linien 6 kann dadurch - verglichen mit der Belichtungsdauer bei zentralen Blenden - merklich verkürzt werden. Zwar kann somit eine Bildverwaschung bzw. Bewegungsunschärfe in Aufnahmen von relativ zur Kamera bewegten Objekten verringert werden. Da sich jedoch das projizierte Bild bei Luftbildaufnahmen 1 durch die Flugvorwärtsbewegung relativ zum Sensor und relativ zum Vorhang der Schlitzblende bewegt, ist - bedingt durch die unterschiedlichen Belichtungszeitpunkte der einzelnen Sensor-Linien 6 - das durch den Sensor erfasste Luftbild des Geländes entweder gestaucht, d.h. zusammen gequetscht, oder gestreckt, d.h. in die Länge gezogen; je nach dem, ob sich die Schlitzblende in Gleich- oder in Gegenrichtung des projizierten Bildes über den Flächensensor 4 verschiebt.

Figur 2 zeigt ein Flugobjekt 3, das eine Luftbildkamera 2 mit einem Schlitzblendenverschluss 7 trägt.

Während der Belichtungszeit bzw. Integrationszeit für z.B. ein im Gesamterfassungsbereich 12 der Luftbildkamera 2 liegendes Planquadrat auf der Erdoberfläche ergibt sich - durch die Flugvorwärtsbewegung - eine Verschiebung des aufzunehmenden Planquadrates bezüglich der im fliegenden Objekt angeordneten Luftbildkamera 2.

Zu einem bestimmten Zeitpunkt während der Gesamtbelichtungszeit des Flächensensors 4 der Luftbildkamera 2 werden - abhängig von der momentanen Stellung der Vorhänge des Schlitzblendenverschlusses 7 - jeweils nur eine oder einige wenige Sensor-Linien 6 des Flächensensors 4 belichtet, die jeweils nur einen im Planquadrat liegenden sehr schmalen Geländestreifen 9 erfassen. Die einzelnen Sensor-Linien 6 werden somit jeweils zu unterschiedlichen mittleren Belichtungszeitpunkten belichtet.

Aus diesem Grund - nämlich da durch den Schlitzblendenverschluss 7 die Sensor-Linien 6 des Flächensensors 4 jeweils nacheinander belichtet werden - werden auch die einzelnen Geländestreifen 9 des im Gesamterfassungsbereich 12 liegenden Gelände-Planquadrats nacheinander, zu unterschiedlichen Zeitpunkten erfasst. Dabei verschiebt sich - durch die Flugvorwärtsbewegung - das projizierte Bild des Gelände-Planquadrats während der Gesamtbelichtungszeit relativ zum Flächensensor 4.

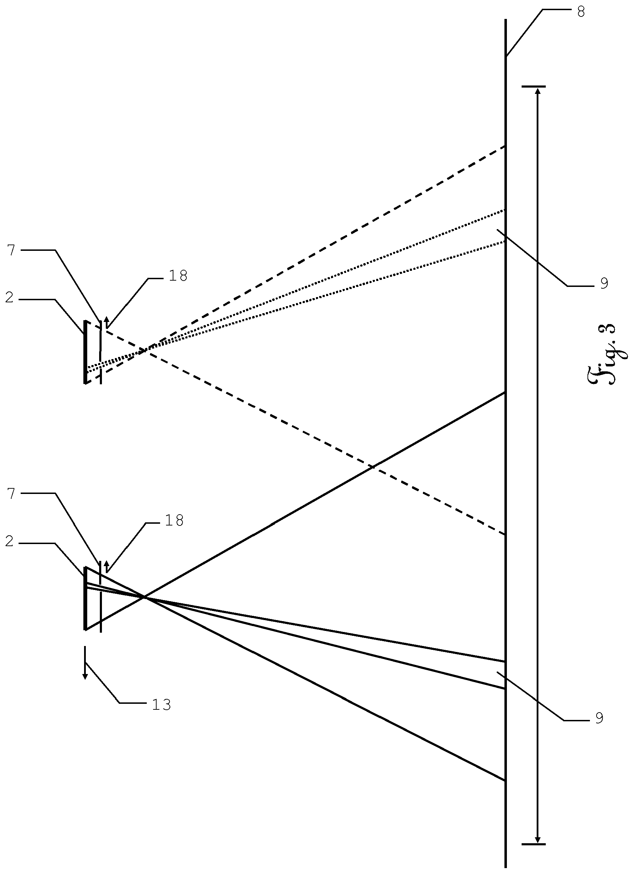

Figur 3 zeigt einen Vorgang zum Aufnehmen eines Luftbildes beispielhaft zu zwei konkreten Zeitpunkten während der Gesamtbelichtungszeit. Die Luftbildkamera 2 weist einen Schlitzblendenverschluss 7 auf, sodass zur Belichtung des Flächensensors 4 ein Schlitz über das projizierte Bild rollt.

Zu einem ersten Zeitpunkt befindet sich das Flugobjekt 3 in einer ersten Flugposition und im Gesamterfassungsbereich 12 der Luftbildkamera 2 liegt ein erstes Planquadrat (oder eine erste Rechtecksfläche) des überflogenen Geländes 8. Der Schlitz des Blendenverschlusses gibt zu diesem Zeitpunkt nur wenige Sensor-Linien 6 frei, wobei anhand der Sensor-Linien 6 jeweils nur ein schmaler Geländestreifen 9 des im Gesamterfassungsbereich 12 liegenden Geländes erfasst wird.

Zu einem zweiten, späteren Zeitpunkt befindet sich das Flugobjekt 3 - durch die Flugvorwärtsbewegung - bereits in einer zweiten Position, sodass nun eine - gegenüber der ersten Rechtecksfläche - in Flugrichtung 13 verschobene zweite Rechtecksfläche des überflogenen Geländes 8 im Gesamterfassungsbereich 12 der Kamera liegt. Auch der Schlitz, der zur Bildaufnahme über den Flächensensor 4 rollt, ist inzwischen in einer zweiten Position, sodass weitere, jedoch wiederum nur wenige Sensor-Linien 6 des Flächensensors 4 zu diesem Zeitpunkt zur Belichtung freigegeben sind und einen schmalen Geländestreifen 9 erfassen.

Im gezeigten Fall rollt der Schlitz entgegen der Flugrichtung 13 über den Flächensensor 4. Somit wird im Rahmen einer Luftbildaufnahme 1 (d.h. durch das Rollen der Schlitzblende über das gesamte Bild und nacheinander erfolgende Belichten die einzelnen Sensor-Linien 6) letztendlich ein Bereich des überflogenen Geländes 8 erfasst, der in Flugrichtung 13 eine über den eigentlichen Erfassungsbereich 12 der Luftbildkamera 2 hinausgehende Ausdehnung aufweist. Jedoch wird dieser grössere, tatsächlich erfasste Bereich des Geländes zusammengequetscht aufgenommen.

Die gestauchte Aufnahme kann nun anhand eines Kompensationsfaktors entzerrt werden, der insbesondere von der Flughöhe über dem Gelände, der Fluggeschwindigkeit, den Belichtungszeitpunkten der einzelnen Sensor-Linien 6 (die sich durch die Rollgeschwindigkeit und Rollrichtung 18 der Schlitzblende ergeben) sowie der Brennweite der Luftbildkamera 2 abhängt.

Das ganzheitliche Korrigieren der Luftbildaufnahme 1 anhand eines einzigen solchen Kompensationsfaktors funktioniert im Allgemeinen akzeptabel, solange das überflogene und erfasste Gelände eben ist - und daher die Flughöhe über den jeweils nacheinander erfassten Geländestreifen 9 während der Luftbildaufnahme 1 als im Wesentlichen konstant angenommen werden kann - sowie solange sich die Fluggeschwindigkeit, Brennweite, etc. während der Gesamtbelichtungsdauer des Flächensensors 4 nicht wesentlich ändern.

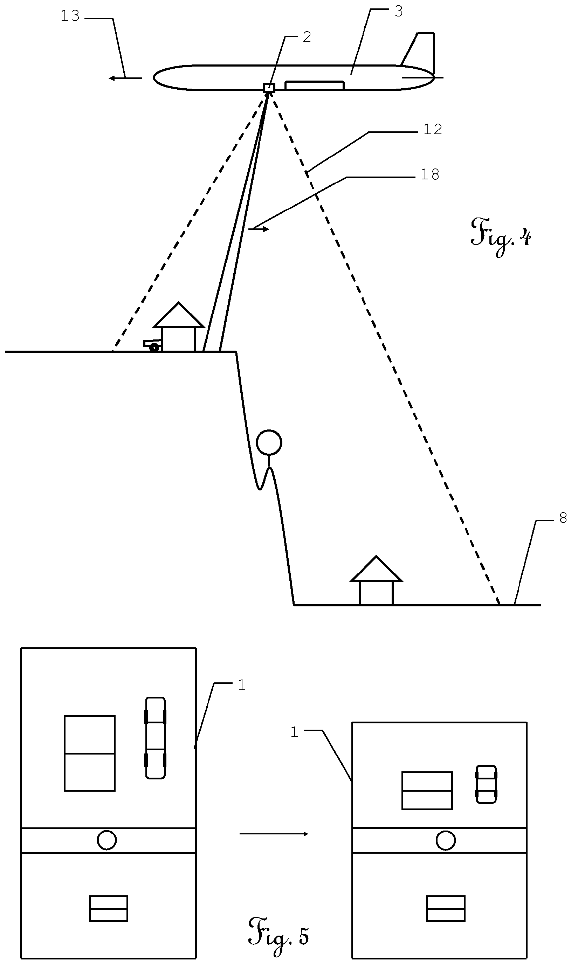

Der Schlitzblendenverschluss 7 der Luftbildkamera 2 aus Figur 4 rollt in Flugrichtung 13 (und auch in jener Richtung, in welcher das projizierte Bild relativ zum Flächensensor 4 driftet) über den Flächensensor 4. Daher weist ein aufgenommenes Luftbild in diesem Fall eine Dehnung des erfassten Geländes als die durch die Flugvorwärtsbewegung verursachte Verzerrung auf.

Wie in Figur 4 zudem ersichtlich, hat das überflogene Gelände 8 ein variierendes Höhenprofil, sodass auch die relative Flughöhe über den nacheinander anhand der einzelnen Sensor-Zeilen erfassten Geländestreifen 9 stark variiert. Daher ist auch die Driftgeschwindigkeit verschiedener Bereiche des projizierten Bilds relativ zum Flächensensor 4 und relativ zur Schlitzblende unterschiedlich hoch.
Wird ein dabei aufgenommenes Luftbild des überflogenen Geländes 8 nun anhand eines einzigen, für den gesamten Flächensensor 4 zur Anwendung kommenden Kompensationsfaktors korrigiert (wobei zur Ableitung des Kompensationsfaktor z.B. die relative Flughöhe über dem tiefer gelegenen Haus des Geländes berücksichtigt wird), so ergibt sich daraus die in Figur 5 linksseitig dargestellte Luftbildaufnahme 1. Der untere Bereich dieser korrigierten Luftbildaufnahme 1, für welchen die relative Flughöhe über dem tiefer gelegenen Haus berücksichtigt wurde, konnte dadurch akzeptabel entzerrt werden, sodass das untere Haus im Wesentlichen wahrheitsgetreu dargestellt ist. Da jedoch die Driftgeschwindigkeit des auf die Sensor-Linien 6 projizierten Bildes des höher gelegenen Hauses - aufgrund der geringeren relativen Flughöhe - während der Aufnahme höher war, wird dieser Bereich in der Luftbildaufnahme 1 - trotz Korrektur anhand des einheitlich für den gesamten Flächensensor 4 zur Anwendung kommenden Kompensationsfaktors - gestreckt bzw. gedehnt wiedergegeben.
Erfindungsgemäss wird nun den einzelnen Sensor-Linien 6 jeweils eine, insbesondere zum Belichtungszeitpunkt aktuelle, relative Flughöhe über dem durch die jeweilige Sensor-Linie erfassten Geländestreifen 9 zugeordnet.

Abhängig von der jeweils zugeordneten relativen Flughöhe wird nun für die einzelnen Sensor-Linien 6 separat jeweils ein Vorwärtsbewegungs-Kompensationsfaktor bestimmt und die Verzerrung in der Luftbildaufnahme 1 linienweise anhand des jeweiligen Kompensationsfaktors korrigiert.

Durch das erfindungsgemäss linienweise (oder insbesondere zeilenweise) erfolgende Kompensieren der durch die Flugvorwärtsbewegung bedingten Drift des projizierten Bildes können nun auch - zeitlich oder bereichsweise - variierende Driftgeschwindigkeiten bei der Verzerrungskorrektur berücksichtigt werden.

Die rechtsseitige Darstellung in Figur 5 zeigt aufgenommenes Luftbild des in überflogenen Geländes 8 aus Figur 4, wobei das Luftbild anhand des erfindungsgemässen Verfahrens linienweise - d.h. abhängig von der jeweiligen relativen Flughöhe über den durch die einzelnen Sensor-Linien 6 zu unterschiedlichen Belichtungszeitpunkten erfassten Geländestreifen 9 - korrigiert wurde. Für jede Sensor-Linie wird separat ein Kompensationsfaktor abgeleitet. Da der Kompensationsfaktor abhängt von der jeweiligen relativen Flughöhe sowie insbesondere von jeweils zum Belichtungszeitpunkt der Sensor-Linien 6 aktuellen Fluggeschwindigkeiten, Brennweite, IMU-Messdaten, etc. können erfindungsgemäss für die Verzerrungskompensation auch unebene Geländeprofile und sich während der Gesamtbelichtungszeit ändernde Fluggeschwindigkeiten, Brennweite, Flugzeugschwankungen, etc. berücksichtigt werden.

Als der Belichtungszeitpunkt der einzelnen Sensor-Linien 6 kann dabei jeweils beispielsweise ein mittlerer Zeitpunkt während der jeweiligen Belichtungszeit der einzelnen Sensor-Linien 6 angenommen werden, sodass ein konkreter Belichtungszeitpunkt der jeweiligen Sensor-Linien 6 abhängig vom Belichtungsbeginn und/oder vom Belichtungs-Endzeitpunkt fiktiv definiert werden kann.

Weist das überflogene Gelände 8 dabei entlang der anhand der Sensor-Linien 6 nacheinander, einzeln erfassten Geländestreifen 9 ebenso ein variierendes Höhenprofil auf, so kann als die relative Flughöhe über dem jeweiligen Geländestreifen 9 z.B. eine mittlere Höhe über dem Geländestreifen 9 abgeleitet und für das Bestimmen des jeweiligen Kompensationsfaktors herangezogen werden.

Wie aus der rechtsseitig dargestellten Luftbildaufnahme 1 in Figur 5 ersichtlich, kann in der anhand des erfindungsgemässen Verfahrens kompensierten Luftbildaufnahme 1 nun auch das höher gelegene Haus und das nebenstehende Auto wahrheitsgetreu wiedergegeben werden.

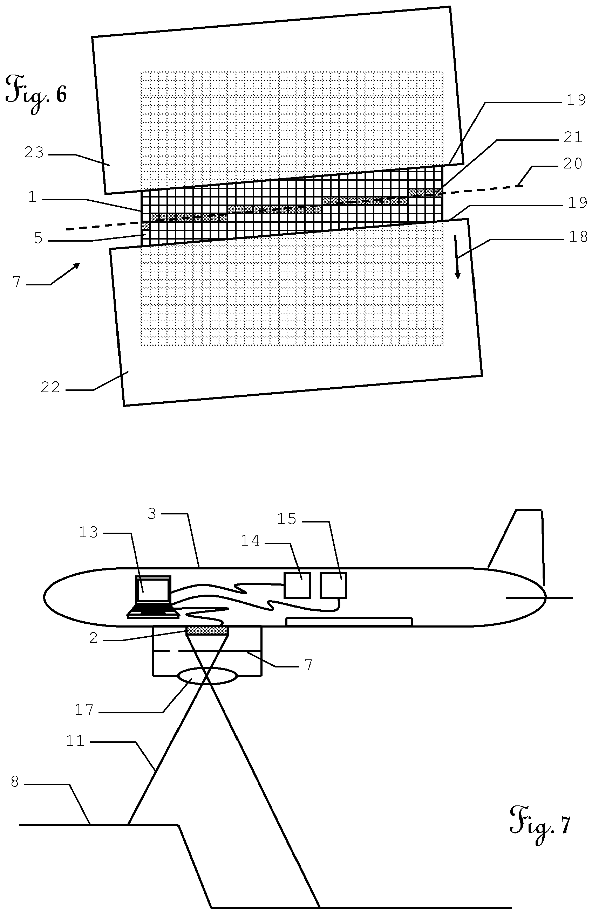

Wie in Figur 6 dargestellt, können die Vorhänge auch gedreht (d.h. schräg) zum Flächensensor 4 ausgerichtet sein und/oder schräg über den Flächensensor 4 rollen.

Dies kann nützlich sein, falls die Anordnungsachse des Flächensensors 4 nicht exakt mit der Flugrichtung 13 übereinstimmt, beispielsweise aufgrund eines durch Seitenwind bedingten Hundegangs des Flugobjekts 3 oder da der Flächensensor nicht exakt relativ zur Längsachse des Flugobjekts 3 ausgerichtet ist.

Jene Pixel 5, die aufgrund der Ausrichtung des Schlitzes gegenüber dem Flächensensor 4 jeweils einen im Wesentlichen gemeinsamen, gleichen Belichtungszeitpunkt aufweisen, können dann zu einer Sensor-Linie zusammengefasst werden. Die Pixel 5, die in einem solchen Fall jeweils zu einer Sensor-Linie 21 zusammengefasst werden, können beispielsweise anhand Interpolation bestimmt werden.

D.h., die jeweils im Wesentlichen zu gleichen Zeitpunkten belichteten Pixel 5 des Flächensensors 4 liegen dabei entlang fiktiven Linien 20, welche parallel zu den Kanten 19 der Vorhänge des Schlitzblendenverschlusses 7 liegen.

Je nach Auflösung des Flächensensors 4 und erforderlicher Genauigkeit des linienweise erfolgenden Kompensations-verfahrens können erfindungsgemäss auch zwei oder einige wenige Pixelreihen jeweils zu einer Sensor-Linie 21 zusammengefasst werden, die entlang einer fiktiven, parallel zur Erstreckungsrichtung des Schlitzes ausgerichteten Linie 20 liegen. Somit kann also eine Sensor-Linie in Spaltenrichtung auch eine Breite von jeweils z.B. 2, 3 oder 4 Pixeln 5 aufweisen (d.h. einige wenige Pixel 5 in Spaltenrichtung des Flächensensors 4 pro definierter Sensor-Linie).

Die Sensor-Linien 6 können dann z.B. mit ihren jeweiligen - durch die Rollgeschwindigkeit und -richtung 18 der Schlitzblende bedingten - Belichtungszeitpunkten verknüpft und gespeichert werden.

In Figur 7 ist ein erfindungsgemässes Luftbildkamera-System zur von einem Flugobjekt 3 aus erfolgenden Aufnahme von Luftbildern eines überflogenen Geländes 8 gezeigt. Das Luftbildkamera-System weist dabei ein Objektiv 17, einen - eine Vielzahl von photosensitiven Pixel 5 aufweisenden - Flächensensor 4, einen sich über ein projiziertes Bild verschiebbaren Schlitzblendenverschluss 7 zur Belichtung von einzelnen Sensor-Linien 6, insbesondere Zeilen, des Flächensensors 4 zu jeweils unterschiedlichen, aufeinander folgenden Belichtungszeitpunkten, sodass die Sensor-Linien 6 jeweils einen Geländestreifen 9 des überflogenen Geländes 8 zu den unterschiedlichen Belichtungszeitpunkten erfassen, und eine elektronischen Datenverarbeitungseinheit 16 auf. Die Datenverarbeitungseinheit 16 ist dabei zur Durchführung zumindest folgender Schritte des oben beschriebenen erfindungsgemässen Kompensations-Verfahrens ausgebildet:
- Zuordnen von jeweils einer, insbesondere zum Belichtungszeitpunkt aktuellen, relativen Flughöhe über dem durch die jeweilige Sensor-Linie erfassten Geländestreifen 9 zu den einzelnen Sensor-Linien 6, und
- Bestimmen jeweils eines Kompensationsfaktors separat für jede Sensor-Linie, der von einer Fluggeschwindigkeit des Flugobjekts 3, einer Brennweite der Luftbildkamera 2 sowie der der jeweiligen Sensor-Linie zugeordneten relativen Flughöhe abhängt, und
- linienweises Korrigieren einer durch eine Flugvorwärtsbewegung verursachten Verzerrung in der Luftbildaufnahme 1 anhand des jeweiligen Kompensationsfaktors.

Dabei kann der jeweilige Kompensationsfaktor durch die Datenverarbeitungseinheit 16 abhängig von Messdaten eines im Flugobjekt 3 mitgeführten Satellitennavigationssystems 14 sowie insbesondere einer Inertialsensoreneinheit 15 bestimmt werden.

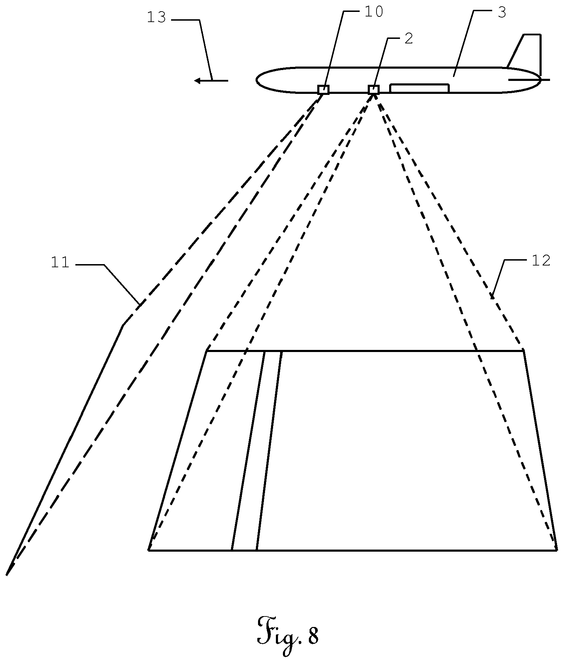

In Figur 8 ist dem Luftbildkamera-System zusätzlich ein Laserscanner 10 ("Airborne LIDAR Sensor") zur Vermessung des Geländes zugeordnet, wobei der Erfassungsbereich 11 des Laserscanners 10 derart ausgerichtet ist, dass dieser dem Erfassungsbereich 12 der Luftbildkamera 2 in Flugrichtung 13 vorgeordnet ist. Dadurch wird ermöglicht, dass während eines Fluges sowohl das digitale 3D-Modell abgeleitet (aus den Messungen des Laserscanners 10) als auch die Luftbilder aufgenommen und linienweise - abhängig von der jeweiligen relativen Flughöhe - kompensiert werden können.

Insbesondere kann dabei ein Speicher für ein digitales 3D-Modell des überflogenen Geländes 8 vorgesehen sein, sodass die Datenverarbeitungseinheit 16 aus der Kenntnis des gespeicherten digitalen 3D-Modells jeweils linienweise die relativen Flughöhen über den anhand der Sensor-Linien erfassten Geländestreifen 9 ableiten kann.

Es versteht sich, dass diese dargestellten Figuren nur mögliche Ausführungsbeispiele schematisch darstellen. Die verschiedenen Ansätze können erfindungsgemäss ebenso miteinander sowie mit Verfahren zum Kompensieren einer durch eine Flugvorwärtsbewegung verursachten Verzerrung und Luftbildkamera-Systemen des Stands der Technik kombiniert werden.

## Patentansprüche

1. Verfahren zum Korrigieren einer durch eine Flugvorwärtsbewegung verursachten Verzerrung in einer Luftbildaufnahme (1), die mit einer Luftbildkamera (2) von einem Flugobjekt (3) aus aufgenommen wird,
• wobei die Luftbildaufnahme (1) durch einen eine Vielzahl von photosensitiven Pixel (5) aufweisenden Flächensensor (4) der Luftbildkamera (2) erfasst wird, dessen Sensor-Linien (6), insbesondere Zeilen, anhand eines sich über ein projiziertes Bild verschiebenden Schlitzblendenverschlusses (7) zu unterschiedlichen, aufeinander folgenden Belichtungszeitpunkten belichtet werden, sodass die einzelnen Sensor-Linien (6) jeweils einen Geländestreifen (9) des überflogenen Geländes (8) zu den unterschiedlichen Belichtungszeitpunkten erfassen,
• wobei den einzelnen Sensor-Linien (6) jeweils eine, insbesondere zum Belichtungszeitpunkt aktuelle, relative Flughöhe über dem durch die jeweilige Sensor-Linie erfassten Geländestreifen (9) zugeordnet wird, und
• wobei für die einzelnen Sensor-Linien (6) separat jeweils ein Kompensationsfaktor bestimmt wird, der von einer Fluggeschwindigkeit des Flugobjekts (3), einer Brennweite der Luftbildkamera (2) sowie der der jeweiligen Sensor-Linie zugeordneten relativen Flughöhe abhängt, und die Verzerrung in der Luftbildaufnahme (1) linienweise anhand des jeweiligen Kompensationsfaktors korrigiert wird.

2. Verfahren nach Anspruch 1, wobei,
die den Sensor-Linien (6) jeweils zugeordnete relative Flughöhe unter Berücksichtigung eines bekannten digitalen 3D-Modells des überflogenen Geländes (8) bestimmt wird.

3. Verfahren nach Anspruch 2, wobei das Gelände anhand eines Laserscanners (10) - insbesondere zeitlich parallel zum Erfassen der Luftbildaufnahmen (1) - vermessen und daraus das digitale 3D-Modell erstellt wird, im Speziellen wobei der Erfassungsbereich (11) des Laserscanners (10) dem Erfassungsbereich (12) der Luftbildkamera (2) in Flugrichtung (13) vorgeordnet ist.

4. Verfahren nach einem der Ansprüche 1 bis 3, wobei
der jeweilige Kompensationsfaktor bestimmt wird abhängig von Messdaten eines im Flugobjekt (3) mitgeführten Satellitennavigationssystems (14) sowie insbesondere einer Inertialsensoreneinheit (15).

5. Verfahren nach einem der Ansprüche 1 bis 4, wobei der Kompensationsfaktor für die Sensor-Linien (6) jeweils abhängig von der zum jeweiligen Belichtungszeitpunkt der Sensor-Linien (6) aktuellen Fluggeschwindigkeit des Flugobjekts (3) bestimmt wird.

6. Verfahren nach einem der Ansprüche 1 bis 5, wobei der Kompensationsfaktor für die Sensor-Linien (6) jeweils abhängig von einem durch
• die relative Flughöhe und
• die, insbesondere zum jeweiligen Belichtungszeitpunkt aktuelle, Brennweite der Luftbildkamera (2)
definierten Abbildungsmassstab des Bildes bestimmt wird.

7. Verfahren nach einem der Ansprüche 1 bis 6, wobei
der Kompensationsfaktor für die Sensor-Linien (6) jeweils bestimmt wird abhängig von
• einem, insbesondere zum jeweiligen Belichtungszeitpunkt aktuellen, Gierwinkel,
• einem, insbesondere zum jeweiligen Belichtungszeitpunkt aktuellen, Längsneigungswinkel und/oder
• einem, insbesondere zum jeweiligen Belichtungszeitpunkt aktuellen, Querneigungswinkel
des Flugobjekts (3), die den jeweiligen Sensor-Linien (6) zugeordnet werden.

8. Verfahren zum mit einer Luftbildkamera (2) von einem Flugobjekt (3) aus erfolgenden Aufnehmen eines Luftbilds von einem überflogenen Gelände (8),
• wobei das Luftbild durch einen eine Vielzahl von photosensitiven Pixel (5) aufweisenden Flächensensor (4) der Luftbildkamera (2) erfasst wird, dessen Sensor-Linien (6), insbesondere Zeilen, anhand eines sich über ein projiziertes Bild verschiebenden Schlitzblendenverschlusses (7) zu unterschiedlichen, aufeinander folgenden Belichtungszeitpunkten belichtet werden, sodass die einzelnen Sensor-Linien (6) jeweils einen Geländestreifen (9) des überflogenen Geländes (8) zu den unterschiedlichen Belichtungszeitpunkten erfassen, und
• wobei eine durch eine Flugvorwärtsbewegung des Flugobjekts (3) verursachte Verzerrung im aufgenommenen Luftbild anhand des Verfahrens nach einem der Ansprüche 1 bis 7 korrigiert wird.

9. Luftbildkamera-System zur von einem Flugobjekt (3) aus erfolgenden Aufnahme von Luftbildern eines überflogenen Geländes (8), mit
• einem Objektiv (17),
• einem eine Vielzahl von photosensitiven Pixel (5) aufweisenden Flächensensor (4),
• einem über ein projiziertes Bild verschiebbaren Schlitzblendenverschluss (7) zur Belichtung von einzelnen Sensor-Linien (6), insbesondere Zeilen, des Flächensensors (4) zu jeweils unterschiedlichen, aufeinander folgenden Belichtungszeitpunkten, sodass die Sensor-Linien (6) jeweils einen Geländestreifen (9) des überflogenen Geländes (8) zu den unterschiedlichen Belichtungszeitpunkten erfassen, und
• einer elektronischen Datenverarbeitungseinheit (16) zur Durchführung zumindest folgender Schritte des Verfahrens nach einem der Ansprüche 1 bis 7:
- Zuordnen von jeweils einer, insbesondere zum Belichtungszeitpunkt aktuellen, relativen Flughöhe über dem durch die jeweilige Sensor-Linie erfassten Geländestreifen (9) zu den einzelnen Sensor-Linien (6), und
- Bestimmen jeweils eines Kompensationsfaktors separat für jede Sensor-Linie, der von einer Fluggeschwindigkeit des Flugobjekts (3), einer Brennweite der Luftbildkamera (2) sowie der der jeweiligen Sensor-Linie zugeordneten relativen Flughöhe abhängt, und
- linienweises Korrigieren einer durch eine Flugvorwärtsbewegung verursachten Verzerrung in der Luftbildaufnahme (1) anhand des jeweiligen Kompensationsfaktors.

10. Luftbildkamera-System nach Anspruch 9, wobei
• ein Speicher für ein digitales 3D-Modell des überflogenen Geländes (8) vorgesehen ist und
• die Datenverarbeitungseinheit (16) zur Ableitung der jeweils linienweise zugeordneten relativen Flughöhen aus der Kenntnis des gespeicherten digitalen 3D-Modells ausgebildet ist.

11. Luftbildkamera-System nach Anspruch 10, wobei
• ein Laserscanner (10) zur Vermessung des Geländes vorhanden ist, im Speziellen wobei der Erfassungsbereich (11) des Laserscanners (10) derart ausgerichtet ist, dass dieser dem Erfassungsbereich (12) der Luftbildkamera (2) in Flugrichtung (13) vorgeordnet ist, und
• die elektronische Datenverarbeitungseinheit (16) ausgebildet ist zur Erstellung des digitalen 3D-Modells aus Messdaten des Laserscanners (10) und zur Abspeicherung des 3D-Modells.

12. Computerprogrammprodukt, das auf einem maschinenlesbaren Träger gespeichert ist, oder Computer-Daten-Signal, verkörpert durch eine elektromagnetische Welle, mit Programmcode zur Durchführung zumindest folgender Schritte des Verfahrens nach einem der Ansprüche 1 bis 7:
• Zuordnen (5) von jeweils einer, insbesondere zum Belichtungszeitpunkt aktuellen, relativen Flughöhe über dem durch die jeweilige Sensor-Linie (6) erfassten Geländestreifen (9) zu den einzelnen Sensor-Linien (6), und
• Bestimmen jeweils eines Kompensationsfaktors separat für jede Sensor-Linie, der von einer Fluggeschwindigkeit des Flugobjekts (3), einer Brennweite der Luftbildkamera (2) sowie der der jeweiligen Sensor-Linie zugeordneten relativen Flughöhe abhängt, und
• linienweises Korrigieren einer durch eine Flugvorwärtsbewegung verursachten Verzerrung in der Luftbildaufnahme (1) anhand des jeweiligen Kompensationsfaktors,
insbesondere wenn das Programm in einer elektronischen Datenverarbeitungseinheit (16) ausgeführt wird.

## Claims

1. A method for correcting a distortion, caused by a forward flight movement, in an aerial photograph (1) that is taken with an aerial camera (2) from a flying object (3),
• the aerial photograph (1) being captured by a surface sensor (4), having a multiplicity of photosensitive pixels (5), of the aerial camera (2), the sensor lines (6) of which surface sensor, in particular rows, being exposed at different, successive exposure times with the aid of a slit diaphragm shutter (7) displaced over a projected image, so that the individual sensor lines (6) respectively sense a terrain strip (9) of the overflown terrain (8) at the different exposure times,
• the individual sensor lines (6) respectively being assigned a relative flight altitude, in particular current at the exposure time, above the terrain strip (9) sensed by the respective sensor line, and
• there being respectively determined, separately for the individual sensor lines (6), a compensation factor that depends on an air speed of the flying object (3), on a focal length of the aerial camera (2) and on the relative flight altitude assigned to the respective sensor line, and the distortion in the aerial photograph (1) being corrected in linewise fashion with the aid of the respective compensation factor.

2. The method as claimed in claim 1,
wherein
the relative flight altitude respectively assigned to the sensor lines (6) is determined taking account of a known digital 3D model of the overflown terrain (8).

3. The method as claimed in claim 2,
wherein
the terrain is measured with the aid of a laser scanner (10) - in particular at the same time as the capture of the aerial photographs (1) - and the digital 3D model is set up therefrom, the sensing range (11) of the laser scanner (10) specifically being arranged ahead of the capture range (12) of the aerial camera (2) in the flight direction (13).

4. The method as claimed in one of claims 1 to 3,
wherein
the respective compensation factor is determined as a function of measured data of a satellite navigation system (14) carried along in the flying object (3) and, in particular, an inertial sensor unit (15).

5. The method as claimed in one of claims 1 to 4,
wherein
the compensation factor for the sensor lines (6) is respectively determined as a function of the air speed of the flying object (3) that is current for the relative exposure time of the sensor lines (6).

6. The method as claimed in one of claims 1 to 5,
wherein
the compensation factor for the sensor lines (6) is respectively determined depending on an imaging scale of the image defined by
• the relative flight altitude and
• the focal length, particularly current at the respective exposure time, of the aerial camera (2).

7. The method as claimed in one of claims 1 to 6,
wherein
the compensation factor for the sensor lines (6) is respectively determined as a function of
• a yaw angle, in particular current at the respective exposure time,
• a longitudinal inclination angle, in particular current at the respective exposure time, and/or
• a transverse inclination angle, in particular current at the respective exposure time,
of the flying object (3), the angles being assigned to the respective sensor lines (6).

8. A method for taking, with an aerial camera (2) from a flying object (3), an aerial image of an overflown terrain (8),
• the aerial image being captured by a surface sensor (4), having a multiplicity of photosensitive pixels (5), of the aerial camera (2), the sensor lines (6) of which surface sensor, in particular rows, being exposed at different, successive exposure times with the aid of a split diaphragm shutter (7) displaced over a projected image, so that the individual sensor lines (6) respectively sense a terrain strip (9) of the overflown terrain (8) at the different exposure times, and
• a distortion, caused by a forward flight movement of the flying object (3), in the taken aerial image being corrected with the aid of the method as claimed in one of claims 1 to 7.

9. An aerial camera system for taking, from a flying object (3), aerial images of an overflown terrain (8), having
• an objective (17),
• a surface sensor (4) having a multiplicity of photosensitive pixels (5),
• a slit diaphragm shutter (7), displaceable over a projected image, for exposing individual sensor lines (6), in particular rows, of the surface sensor (4) at respectively different, successive exposure times, so that the sensor lines (6) respectively sense a terrain strip (9) of the overflown terrain (8) at the different exposure times, and
• an electronic data processing unit (16) for carrying out at least the following steps of the method as claimed in one of claims 1 to 7:
- respectively assigning to the individual sensor lines (6) a relative flight altitude, in particular current at the exposure time, above the terrain strip (9) sensed by the respective sensor line, and
- respectively determining separately for each sensor line a compensation factor that depends on an air speed of the flying object (3), a focal length of the aerial camera (2) and the relative flight altitude assigned to the respective sensor line, and
- correcting, in linewise fashion, distortion, caused by a forward flight movement, in the aerial photograph (1) with the aid of the respective compensation factor.

10. The aerial camera system as claimed in claim 9,
wherein
• a memory is provided for a digital 3D model of the overflown terrain (8), and
• the data processing unit (16) is configured to derive the relative flight altitudes, respectively assigned in linewise fashion, from the knowledge of the stored digital 3D model.

11. The aerial camera system as claimed in claim 10,
wherein
• a laser scanner (10) is present for measuring the terrain, specifically the sensing range (11) of the laser scanner (10) being aligned in such a way that said sensing range is arranged ahead of the capture range (12) of the aerial camera (2) in the flight direction (13), and
• the electronic data processing unit (16) is configured for setting up the digital 3D model from measured data of the laser scanner (10), and for storing the 3D model.

12. A computer program product that is stored on a machine readable carrier, or a computer data signal, embodied by an electromagnetic wave, with program code for carrying out at least the following steps of the method as claimed in one of claims 1 to 7:
• respectively assigning (5) to the individual sensor lines (6) a relative flight altitude, in particular current at the exposure time, above the terrain strip (9) sensed by the respective sensor line (6), and
• respectively determining separately for each sensor line a compensation factor that depends on an air speed of the flying object (3), a focal length of the aerial camera (2) and the relative flight altitude assigned to the respective sensor line, and
• correcting, in linewise fashion, distortion, caused by a forward flight movement, in the aerial photograph (1) with the aid of the respective compensation factor,
in particular when the program is executed in an electronic data processing unit (16).

## Revendications

1. Procédé de correction d'une distorsion provoquée par un déplacement aérien vers l'avant dans une prise de vue aérienne (1) effectuée avec un appareil de prise de vues aériennes (2) à partir d'un objet volant (3),
• dans lequel la prise de vue aérienne (1) est détectée par un capteur surfacique (4) de l'appareil de prise de vues aériennes (2) qui présente une pluralité de pixels photosensibles (5), dont les lignes de détection (6), en particulier les rangées, sont exposées à différents instants d'exposition successifs à l'aide d'un obturateur à diaphragme en fente (7) qui se déplace sur une image projetée, de sorte que les lignes de détection (6) individuelles détectent chaque fois, aux différents instants d'exposition, une bande (9) du terrain (8) survolé,
• dans lequel une altitude relative de vol au-dessus de la bande de terrain (9) détectée par la ligne de détection respective, en particulier actuelle à l'instant d'exposition, est associée à chacune des lignes de détection (6) individuelles, et
• dans lequel un facteur de compensation, qui dépend d'une vitesse de vol de l'objet volant (3), d'une distance focale de l'appareil de prise de vues aériennes (2) ainsi que de l'altitude relative de vol associée à la ligne de détection respective, est déterminé séparément pour chacune des lignes de détection (6) individuelles, et la distorsion dans la prise de vue aérienne (1) est corrigée ligne par ligne à l'aide du facteur de compensation respectif.

2. Procédé selon la revendication 1,
dans lequel
l'altitude relative de vol associée à chacune des lignes de détection (6) est déterminée en tenant compte d'un modèle 3D numérique connu du terrain (8) survolé.

3. Procédé selon la revendication 2,
dans lequel
le terrain est mesuré à l'aide d'un scanner laser (10) - en particulier en même temps que la détection des prises de vues aériennes (1) - ce qui permet ensuite de créer le modèle 3D numérique, en particulier la zone de détection (11) du scanner laser (10) étant disposée avant la zone de détection (12) de l'appareil de prise de vues aériennes (2) dans la direction de vol (13).

4. Procédé selon l'une des revendications 1 à 3,
dans lequel
le facteur de compensation respectif est déterminé en fonction de données de mesure d'un système de navigation par satellites (14) emporté dans l'objet volant (3) ainsi que, en particulier, d'une centrale à inertie (15).

5. Procédé selon l'une des revendications 1 à 4,
dans lequel
le facteur de compensation pour les lignes de détection (6) est chaque fois déterminé en fonction de la vitesse de vol actuelle de l'objet volant (3) à l'instant d'exposition respectif des lignes de détection (6).

6. Procédé selon l'une des revendications 1 à 5,
dans lequel
le facteur de compensation pour les lignes de détection (6) est chaque fois déterminé en fonction d'une échelle de reproduction de l'image définie par
• l'altitude relative de vol et
• la distance focale de l'appareil de prise de vues aériennes (2), en particulier actuelle à l'instant d'exposition respectif.

7. Procédé selon l'une des revendications 1 à 6,
dans lequel
le facteur de compensation pour les lignes de détection (6) est chaque fois déterminé en fonction
• d'un angle de lacet, en particulier actuel à l'instant d'exposition respectif,
• d'un angle d'inclinaison longitudinale, en particulier actuel à l'instant d'exposition respectif, et/ou
• d'un angle d'inclinaison transversale, en particulier actuel à l'instant d'exposition respectif,
de l'objet volant (3), qui sont associés aux lignes de détection (6) respectives.

8. Procédé de prise d'une vue aérienne d'un terrain (8) survolé effectuée avec un appareil de prise de vues aériennes (2) à partir d'un objet volant (3),
• dans lequel la vue aérienne (1) est détectée par un capteur surfacique (4) de l'appareil de prise de vues aériennes (2) qui présente une pluralité de pixels photosensibles (5), dont les lignes de détection (6), en particulier les rangées, sont exposées à différents instants d'exposition successifs à l'aide d'un obturateur à diaphragme en fente (7) qui se déplace sur une image projetée, de sorte que les lignes de détection (6) individuelles détectent chaque fois, aux différents instants d'exposition, une bande (9) du terrain (8) survolé, et
• dans lequel une distorsion provoquée par un déplacement aérien vers l'avant de l'objet volant (3) dans la vue aérienne prise est corrigée à l'aide du procédé selon l'une des revendications 1 à 7.

9. Système de prise de vues aériennes pour la prise de vues aériennes d'un terrain (8) survolé à partir d'un objet volant (3), comprenant
• un objectif (17),
• un capteur surfacique (4) qui présente une pluralité de pixels photosensibles (5),
• un obturateur à diaphragme en fente (7) déplaçable sur une image projetée pour exposer des lignes de détection (6) individuelles, en particulier des rangées, du capteur surfacique (4) à des instants d'exposition successifs chaque fois différents, de sorte que les lignes de détection (6) détectent chaque fois, aux différents instants d'exposition, une bande (9) du terrain (8) survolé, et
• une unité électronique de traitement de données (16) pour exécuter au moins les étapes suivantes du procédé selon l'une des revendications 1 à 7 :
- association d'une altitude relative de vol, en particulier actuelle à l'instant d'exposition, au-dessus de la bande de terrain (9) détectée par la ligne de détection respective à chacune des lignes de détection (6) individuelles, et
- détermination, séparément pour chaque ligne de détection, d'un facteur de compensation qui dépend d'une vitesse de vol de l'objet volant (3), d'une distance focale de l'appareil de prise de vues aériennes (2) ainsi que de l'altitude relative de vol associée à la ligne de détection respective, et
- correction ligne par ligne d'une distorsion provoquée par un déplacement aérien vers l'avant dans la prise de vue aérienne (1) à l'aide du facteur de compensation respectif.

10. Système de prise de vues aériennes selon la revendication 9,
dans lequel
• une mémoire pour un modèle 3D numérique du terrain (8) survolé est prévue et
• l'unité électronique de traitement de données (16) est conçue pour déduire les altitudes relatives de vol respectivement associées ligne par ligne de la connaissance du modèle 3D numérique mémorisé.

11. Système de prise de vues aériennes selon la revendication 10,
dans lequel
• un scanner laser (10) pour mesurer le terrain est présent, en particulier la zone de détection (11) du scanner laser (10) étant orientée de sorte à être disposée avant la zone de détection (12) de l'appareil de prise de vues aériennes (2) dans la direction de vol (13), et
• l'unité électronique de traitement de données (16) est conçue pour créer le modèle 3D numérique à partir des données de mesure du scanner laser (10) et pour mémoriser le modèle 3D.

12. Produit-programme informatique qui est enregistré sur un support lisible par machine, ou signal de données informatiques, matérialisé par une onde électromagnétique, avec un code de programme pour exécuter au moins les étapes suivantes du procédé selon l'une des revendications 1 à 7 :
• association (5) d'une altitude relative de vol, en particulier actuelle à l'instant d'exposition, au-dessus de la bande de terrain (9) détectée par la ligne de détection (6) respective à chacune des lignes de détection (6) individuelles, et
• détermination, séparément pour chaque ligne de détection, d'un facteur de compensation qui dépend d'une vitesse de vol de l'objet volant (3), d'une distance focale de l'appareil de prise de vues aériennes (2) ainsi que de l'altitude relative de vol associée à la ligne de détection respective, et
• correction ligne par ligne d'une distorsion provoquée par un déplacement aérien vers l'avant dans la prise de vue aérienne (1) à l'aide du facteur de compensation respectif,
en particulier lorsque le programme est exécuté dans une unité électronique de traitement de données (16).
